# EUROPÄISCHE PATENTSCHRIFT

(11) **EP 2 157 900 B1**
(45) Veröffentlichungstag und Bekanntmachung des Hinweises auf die Patenterteilung: **14.12.2016**
(21) Anmeldenummer: 08759063.4
(22) Anmeldetag: 06.06.2008
(51) Int. Cl.: A47K 17/02

(54) **HANDGRIFFVORRICHTUNG**
HANDLE GRIP DEVICE
DISPOSITIF DE POIGNÉE

(30) Priorität: 15.06.2007 DE 202007008376 U
(43) Veröffentlichungstag der Anmeldung: 03.03.2010
(73) Patentinhaber: Roth, Eckart, 72213 Altensteig (DE)
(72) Erfinder: Roth, Eckart, 72213 Altensteig (DE)
(74) Vertreter: Patentanwälte Magenbauer & Kollegen Partnerschaft mbB
(86) Internationale Anmeldenummer: PCT/EP2008/004518
(87) Internationale Veröffentlichungsnummer: WO 2008/151761

(56) Entgegenhaltungen:
- WO-A-2007/033830
- DE-A1- 1 806 451
- DE-B3-102004 021 986
- DE-U1- 20 014 971

## Beschreibung

Die Erfindung betrifft eine Handgriffvorrichtung, insbesondere Aufstehhilfe für Personen beispielsweise im Sanitärbereich, mit einem Griffstab, an dem an wenigstens einem Griffende oder zwischen beiden Griffenden wenigstens ein Saugkopf mit einem Saugteller oder einem Saugkolben und einer Betätigungseinrichtung für den Saugteller bzw. Saugkolben angeordnet ist, so dass der wenigstens eine Saugkopf durch Betätigen der Betätigungseinrichtung an einer porösen Fläche unter Bildung eines zwischen der porösen Fläche und dem Saugteller wirkenden Vakuums festsaugbar und von dieser durch Aufhebung des Vakuums lösbar ist, wobei eine auf Abnehmen des Vakuums ansprechende Vakuumverlustanzeigeeinrichtung vorgesehen ist, wobei die Vakuumverlustanzeigeeinrichtung wenigstens ein vom Saugkopf-Gehäuse des Saugkopfes separat ausgebildetes Anzeigeelement aufweist, dass mittels Vakuumänderung zwischen einer mit einem ausreichenden Vakuum für die gewünschte Haltekraft der Handgriffvorrichtung korrespondierenden Grundstellung und wenigstens einer Abnahme des Vakuums anzeigenden Verlustanzeigeposition bewegbar ist, wobei das Anzeigeelement über Kopplungsmittel mit dem Saugteller oder dem Saugkolben gekoppelt ist, die einen einerseits mit dem Saugteller oder dem Saugkolben und andererseits mit dem Anzeigeelement verbundenen Bolzen und ein mit dem Anzeigeelement gekoppeltes Federelement aufweisen, dessen Federkraft gegen die vom Vakuum in Richtung ebene Fläche wirkende Vakuumkraft wirkt.

Ältere oder behinderte Personen müssen sich insbesondere beim Aufstehen, jedoch auch beim Hinsetzen oder Stehen halten. Dies gilt vor allem im Sanitärbereich bei der Benutzung des WC, eines Waschbeckens, einer Dusche oder einer Badewanne. Hierzu sind üblicherweise feststehende Handgriffe installiert. Es sind jedoch bereits auch Handgriffvorrichtungen der eingangs genannten Art auf dem Markt, die nicht unveränderbar fest montiert werden, sondern im Bedarfsfall überall da eingesetzt werden können, wo ein stationär befestigter Handgriff fehlt. Voraussetzung ist lediglich, dass eine, insbesondere ebene Fläche zur Verfügung steht, die im befestigten Zustand den jeweiligen Saugteller dicht abschließt.

So ist beispielsweise aus der EP 1 183 981 eine Handgriffvorrichtung der eingangs erwähnten Art offenbart, mit einem Griffstab, an dessen beiden Endbereichen jeweils ein Saugkopf befestigt ist, der mittels einer Betätigungsvorrichtung an einer ebenen Fläche, beispielsweise an Fliesen, festsaugbar und von dort lösbar ist. Beim Betätigen der Betätigungsvorrichtung wird der gummierte/elastische Saugteller von der ebenen Fläche weg nach oben gezogen, wodurch dieser in seine wirksame Stellung überführt wird, so dass zwischen der ebenen Fläche und dem Saugteller Vakuum entsteht. Durch Öffnen der Betätigungseinrichtung wird dieses Vakuum wieder aufgehoben und der Saugkopf kann von der ebenen Fläche wieder gelöst werden.

Häufig ist es der Fall, dass derartige Handgriffvorrichtungen über längere Zeit an einer ebenen Fläche festgesaugt sind. Dabei kann es passieren, dass das Vakuum mit der Zeit abnimmt, beispielsweise durch Diffusion. Obwohl die Handgriffvorrichtung sich in der Regel bei Restvakuum nicht selber von der ebenen Fläche löst, ist bei Vakuumverlust die gewünschte, von der Handgriffvorrichtung aufzunehmende Haltekraft unterschritten. Dabei kann es vorkommen, dass sich Personen im Vertrauen auf eine zuverlässig festgesaugte Handgriffvorrichtung an dieser festhalten, die Handgriffvorrichtung sich jedoch aufgrund der durch Vakuumverlust geringer gewordenen Haltekraft plötzlich von der ebenen Fläche löst. Dadurch kann es zu Unfällen kommen.

Die DE 18 06 451 A1 beschreibt eine Sauggreifvorrichtung zum Ansetzen an einer ebenen Fläche, wobei durch Drücken eines Druckknopfes in Richtung zur ebenen Fläche hin, entgegen der Federkraft einer Druckfeder eine Membran, die über einen Stößel mit dem Druckknopf verbunden ist, an die ebene Fläche angedrückt wird. Lässt man den Druckknopf los, so entsteht zwischen der Membran und der ebenen Fläche ein Unterdruck, der dafür sorgt, dass die Sauggreifvorrichtung an der ebenen Fläche haften bleibt. An der Außenseite des Druckknopfes befindet sich an einem Innenabschnitt eine Farbmarkierung, die im Kontrast zu dem übrigen Abschnitt des Druckknopfes steht. Der farbige Abschnitt ist unter normalen Betriebsbedingungen, also mit einem ausreichenden Unterdruck bzw. Vakuum, verdeckt angeordnet. Nimmt der Druck ab, so wandert der farbige Bereich nach außen und wird sichtbar.

Die WO 2007/033830 A offenbart eine Vakuumanzeigeeinrichtung in verschiedenen Ausgestaltungen. So ist beispielsweise beschrieben, dass eine Farbumschlag auftreten kann, falls im Sauggreifer Unterdruck vorliegt. Alternativ wird beschrieben, dass sich ein Teil des Saugkopfes einbeult, wenn Unterdruck vorliegt. Eine weitere Alternative ist das Anzeigen eines Unterdrucks mittels einer optischen Anzeige, beispielsweise in Form einer LED.

DE-U-200 14 971 offenbart eine Handgriffvorrichtung, die alle Merkmale des Oberbegriffs des Anspruchs 1 enthält.

Aufgabe der Erfindung ist es, eine Handgriffvorrichtung der eingangs erwähnten Art zu schaffen, die sich zuverlässig an einer ebenen Fläche festsaugen lässt und mit der sich die vorgenannten in Folge Vakuumverlust auftretenden Probleme vermeiden lassen.

Diese Aufgabe wird durch eine Handgriffvorrichtung mit den Merkmalen des unabhängigen Anspruches 1 gelöst. Weiterbildungen der Erfindung sind in den Unteransprüchen dargestellt.

Die erfindungsgemäße Handgriffvorrichtung zeichnet sich dadurch aus, dass das Anzeigeelement und Bolzen relativ zueinander bewegbar sind und durch von der Vakuumkraft erzeugte Haftreibung gegeneinander in Anlage gehalten sind, wobei bei Abnahme von Vakuum mittels der senkrecht zur Richtung der Vakuumkraft wirkenden Federkraft des Federelements die Haftreibung überwindbar ist, wodurch das Anzeigeelement in seine eine gegenüber der Handgriffperipherie exponiert, sichtbare und erfühlbare Stellung einnehmbare Verlustanzeigeposition kommt.

Dadurch wird dem Benutzer also die Abnahme des Vakuums bzw. Vakuumverlust angezeigt, so dass dieser gewarnt ist und sich an einer solchen unzuverlässig festgesaugten Handgriffvorrichtung nicht mehr festhält. Dadurch werden Unfälle aufgrund sich plötzlich von der ebenen Fläche lösenden Handgriffvorrichtungen vermieden. Außerdem bekommt der Benutzer die Information, dass er die Handgriffvorrichtung neu ansetzen und spannen muss, um ein neues, die gewünschte Haltekraft gewährleistendes Vakuum zu erzeugen.

Die Vakuumverlustanzeigeeinrichtung weist wenigstens ein insbesondere mechanisch betätigtes Anzeigeelement auf, das mittels Vakuumänderung zwischen einer mit einem ausreichenden Vakuum für die gewünschte Haltekraft der Handgriffvorrichtung korrespondierenden Grundstellung und wenigstens einer Abnahme des Vakuums anzeigenden Verlustanzeigeposition bewegbar ist. In der Verlustanzeigeposition kann das Anzeigeelement also eine Stellung einnehmen, die durch den Benutzer deutlich wahrgenommen werden kann. Die Stellung des Anzeigeelementes in der Verlustanzeigeposition sticht dem Benutzer quasi "ins Auge". Um diese Wahrnehmbarkeit noch zu erhöhen, kann das Anzeigeelement eine in der Verlustanzeigeposition sichtbare farbige, insbesondere rote, gelborange, und/oder als Logo oder Schrift ausgestaltete und/oder schraffierte Warnmarkierung aufweisen.

In besonders bevorzugter Weise ist das Anzeigeelement in seiner Grundstellung nicht sichtbar im Saugkopf untergebracht. Es kann also erst bei Abnahme des Vakuums aus dem Saugkopf hervortreten, wodurch es dann Aufmerksamkeit erregt. Prinzipiell wäre es jedoch auch denkbar, dass das Anzeigeelement auch bereits in seiner Grundstellung sichtbar ist, dann müsste jedoch gewährleistet sein, dass dieses Grundstellung für den Benutzer klar signalisiert, dass das Vakuum sozusagen noch in Ordnung ist. Dies kann beispielsweise durch eine Markierung oder Stellung des Anzeigeelementes erfolgen, die eindeutig "Vakuum OK" signalisiert, beispielsweise durch grüne oder eine andere, beispielsweise gelbe, Signalfarbe und/oder einer eingefahrenen oder versenkten Ruhestellung des Anzeigelementes. Bevorzugterweise tritt eine Signalwirkung dann auf, wenn die Sollhaltekraft der Handgriffvorrichtung unterschritten wird. Dies kann beispielsweise bei Abfall des Vakuums auf 50% erfolgen.

In der Regel erfolgt die Abnahme des Vakuums nur relativ langsam. Wird das Anzeigeelement an diese langsame Abnahme des Vakuums gekoppelt, würde das Anzeigeelement auch nur langsam von seiner Grundstellung in eine der VerlustanzeigePositionen wandern. Das Anzeigeelement kann dann von einer Verlustanzeigeposition in die nächste wandern, beispielsweise immer weiter aus dem Gehäuse des Saugkopf heraustreten, bis schließlich eine Verlustanzeige-Endposition erreicht ist, von wo aus das Anzeigeelement nicht mehr weiterbewegt werden kann. Es besteht die Gefahr, dass der Benutzer das Anzeigeelement zwar wahrnimmt, jedoch im Falle, dass die Verlustanzeige-Endposition noch nicht erreicht ist, denken könnte, dass das Vakuum zwar nachgelassen hat aber noch nicht so kritisch ist, dass ein Festhalten an der Handgriffvorrichtung gefährlich wäre. Es ist daher von Vorteil, wenn das Anzeigeelement bei Abnahme des Vakuums von seiner Grundstellung ohne in einer Zwischenstellung verharrend, schnell, insbesondere schlagartig in eine Verlustanzeige-Endposition bewegbar ist.

Besonders vorteilhaft ist es, wenn das Anzeigeelement beim nicht erreichten oder eventuell schleichenden Verlust einer beaufschlagten, erhöhten Sicherheits-Toleranz an Vakuum von seiner in diesem Zustand befindlichen Anzeige-Position oder Grundstellung ohne in einer eventuell weiterhin sich verschlechternden Zwischenstellung verharrend, schnell, insbesondere schlagartig in die Verlustanzeige-Endposition bewegbar ist. In diesem Fall befindet sich das Anzeigeelemente also möglichst in seiner deutlich sichtbaren Verlustanzeige-Endposition, so dass die vorstehend erwähnte schleichende Veränderung sich nicht fortsetzt und damit Missverständnisse ausgeschlossen werden.

Das Anzeigeelement ist über Kopplungsmittel mit dem Saugteller oder dem Saugkolben gekoppelt.

Die Kopplungsmittel können eine am Saugteller oder am Saugkolben befestigte, durch Vakuumänderung bewegbare, insbesondere gummielastische Membran aufweisen.

Die Kopplungsmittel weisen einen einerseits mit dem Saugteller oder dem Saugkolben und andererseits mit dem Anzeigeelement verbundenen Bolzen und ein mit dem Anzeigeelement gekoppeltes Federelement auf, dessen Federkraft gegen die vom Vakuum in Richtung ebene Fläche wirkende Vakuumkraft wirkt. Federkraft und Vakuumkraft können also in entgegengesetzte Richtungen wirken, wodurch bei Nachlassen des Vakuums das Anzeigeelement in Folge der Federkraft des Federelements in die Verlustanzeigeposition bewegbar ist.

Anzeigeelement und Bolzen sind relativ zueinander bewegbar und durch von der Vakuumkraft erzeugte Haftreibung gegeneinander in Anlage gehalten sind, wobei bei Abnahme von Vakuum mittels der senkrecht zur Richtung der Vakuumkraft wirkenden Federkraft des Federelements die Haftreibung überwindbar ist, wodurch das Anzeigeelement in seine Verlustanzeigeposition kommt.

Bei einer Weiterbildung der Erfindung weist die Betätigungseinrichtung einen am Saugteller oder am Saugkolben befestigten Betätigungsstößel auf, der aus dem Gehäuse des Saugkopfes herausragt und über eine Anlenkachse mit einem exzentrisch ausgestalteten Betätigungshebel verbunden ist, der zwischen einer offen- und einer Schließstellung verschwenkbar ist, wobei in der Schließstellung aufgrund der Exzentrizität des Betätigungshebels Betätigungsstößel und Saugteller bzw. Saugkolben hochgezogen sind, womit Vakuum erzeugt ist.

Bei einer Weiterbildung der Erfindung sitzt am Griffstab beidenends oder entlang einer Griffreling jeweils mindestens ein Saugkopf. Jedem dieser Saugköpfe kann wenigstens ein Anzeigeelement der Vakuumverlustanzeigeeinrichtung zugeordnet sein.

Zweckmäßigerweise besteht der Saugteller aus gummielastischem Material. Der Saugkolben besteht bevorzugterweise aus steifem Material, oder ist federnd so ausgebildet, dass ein eigenständiges Nachspannen zunächst den Sicherheits-Toleranzbereich wieder erreicht.

Bevorzugte Ausführungsbeispiele der Erfindung sind in der Zeichnung dargestellt und werden im Folgenden näher erläutert. In der Zeichnung zeigen:
- Fig. 1: eine Seitenansicht eines ersten nicht zur Erfindung gehörenden Ausführungsbeispiels der Handgriffvorrichtung mit ausreichendem Vakuum,
- Fig. 2: die Handgriffvorrichtung von Figur 1 bei Vakuumverlust,
- Fig. 3: eine vergrößerte Darstellung eines der Griffenden der Handgriffsvorrichtung von Figur 1,
- Fig. 4: eine Draufsicht auf das Griffende von Figur 3,
- Fig. 5: ein Längsschnitt durch die Handgriffvorrichtung von Figur 4 entlang der Linie V-V in Figur 4,
- Fig. 6: eine vergrößerte Darstellung eines der Griffenden der Handgriffsvorrichtung von Figur 2,
- Fig. 7: eine Draufsicht auf das Griffende von Figur 6,
- Fig. 8: einen Längsschnitt durch die Handgriffvorrichtung von Figur 7 entlang der Linie VIII-VIII in Figur 7,
- Fig. 9: eine Seitenansicht eines zweiten nicht zur Erfindung gehörenden Ausführungsbeispiels der Handgriffvorrichtung bei ausreichendem Vakuum,
- Fig. 10: die Handgriffvorrichtung von Figur 9 bei Vakuumverlust,
- Fig. 11: einen Querschnitt durch einen Saugkopf der Handgriffvorrichtung von Figur 9 entlang der Linie XI-XI in Figur 9,
- Fig. 12: einen Querschnitt durch einen Saugkopf der Handgriffvorrichtung von Figur 10 entlang der Linie XII-XII in Figur 10,
- Fig. 13: eine Draufsicht auf ein drittes erfindungsgemäßes Ausführungsbeispiel der Handgriffvorrichtung bei ausreichendem Vakuum,
- Fig. 14: die Handgriffvorrichtung von Figur 13 bei Vakuumverlust,
- Fig. 15: eine Seitenansicht auf einen der Saugköpfe der Handgriffvorrichtung von Figur 13 in vergrößerter Darstellung,
- Fig. 16: eine Seitenansicht auf einen der Saugköpfe der Handgriffvorrichtung von Figur 14 in vergrößerter Darstellung,
- Fig. 17: einen Längsschnitt durch den Saugkopf der Handgriffvorrichtung von Figur 13 entlang der Linie XVII- XVII in Figur 13 und
- Fig. 18: einen Längsschnitt durch den Saugkopf der Handgriffvorrichtung von Figur 14 entlang der Linie XVIII-XVIII in Figur 14,
- Fig. 19: eine schematische schnittdarstellung eines vierten nicht zur Erfindung gehörenden Ausführungsbeispiels der Handgriffvorrichtung bei ausreichendem Vakuum,
- Fig. 20: die Handgriffvorrichtung von Fig. 19 bei Vakuumverlust,
- Fig. 21: eine Ausführungsform eines sich in der Grundstellung befindlichen Anzeigeelementes der Vakuumverlustanzeigeeinrichtung,
- Fig. 22: das Anzeigeelement von Fig. 21 in der Verlustanzeigeposition,
- Fig. 23: eine weitere Ausführungsform eines sich in der Grundstellung befindlichen Anzeigeelementes der Vakuumverlustanzeigeeinrichtung,
- Fig. 24: das Anzeigeelement von Fig. 23 in der Verlustanzeigeposition,
- Fig. 25: eine weitere Ausführungsform eines sich in der Grundstellung befindlichen Anzeigeelementes der Vakuumverlustanzeigeeinrichtung,
- Fig. 26: das Anzeigeelement von Fig. 25 in der Verlustanzeigeposition,
- Fig. 27: eine weitere Ausführungsform eines sich in der Grundstellung befindlichen Anzeigeelementes der Vakuumverlustanzeigeeinrichtung und
- Fig. 28: das Anzeigeelement von Fig. 27 in der Verlustanzeigeposition.

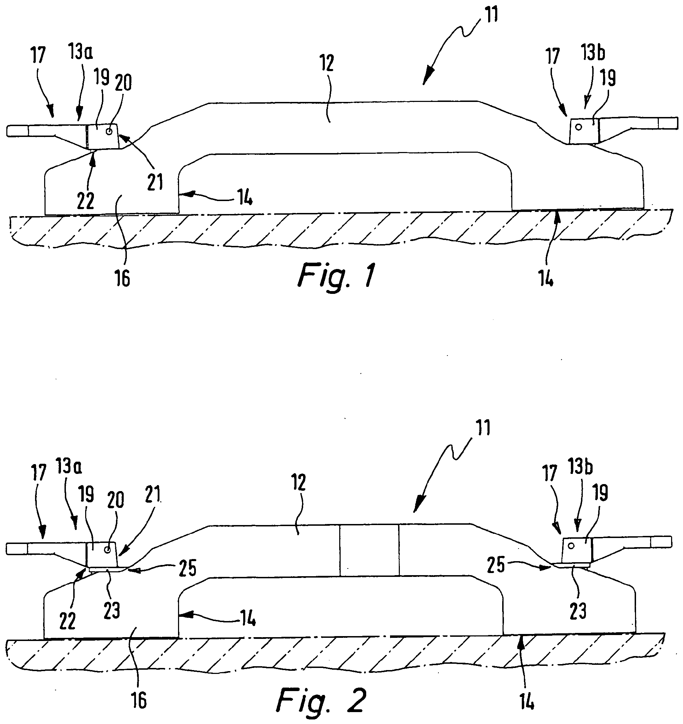

Die Figuren 1 bis 8 zeigen ein erstes nicht zur Erfindung gehörendes Ausführungsbeispiel der Handgriffvorrichtung 11.
Diese weist einen Griffstab 12 auf, an dem an wenigstens einem Griffende 13a, 13b oder entlang des Griffstabes 12 wenigstens ein Saugkopf 14 angeordnet ist, der an einer ebenen Fläche, wie sie beispielsweise von Fliesen gebildet wird, festgesaugt werden kann.

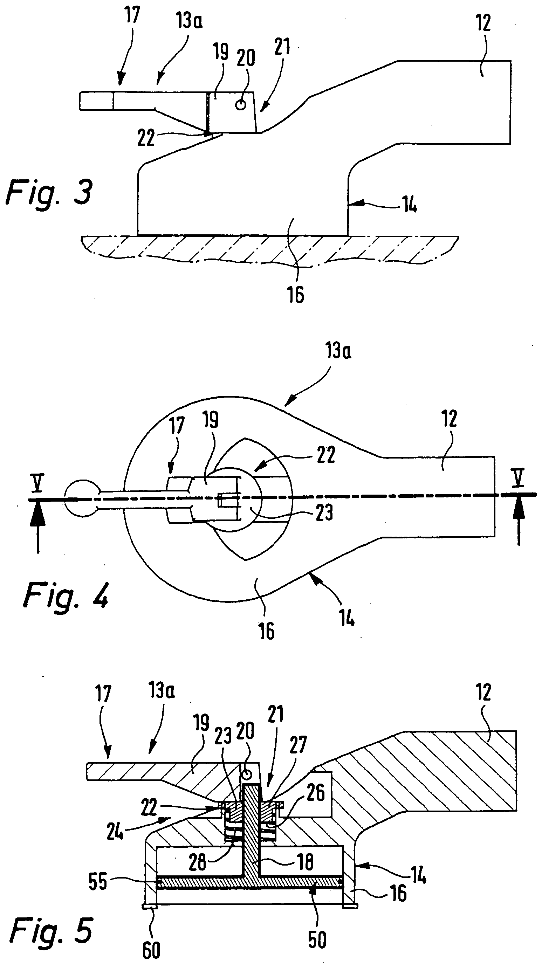

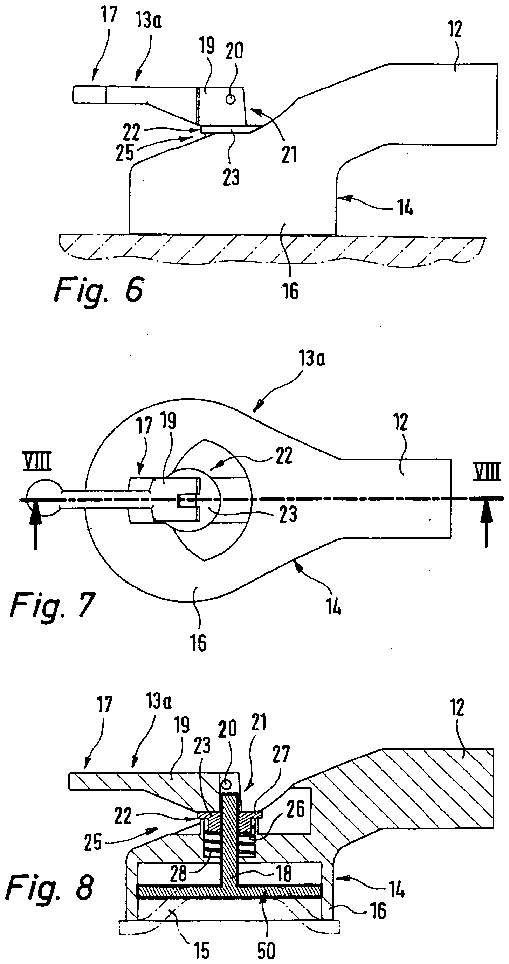

Gemäß beispielhaftem ersten Ausführungsbeispiel ist an beiden Griffenden 13a, 13b des Griffstabs 12 jeweils ein Saugkopf 14 vorgesehen. Der Saugkopf 14 weist gemäß einer ersten Alternative einen Saugteller 15 (Fig. 8 in strichpunktierter Darstellung) auf, der aus gummiartigem flexiblem Material besteht und an der Unterseite des Saugkopfes 14 angeordnet ist. Das Saugkopf-Gehäuse 16 enthält oberhalb des Saugtellers 15 einen Hohlraum, in den vorzugsweise der mittlere Bereich des Saugtellers 15 hochgezogen werden kann. Beim Hochziehen stützt sich der Außenbereich des Saugtellers 15 an der Unterseite des Saugkopf-Gehäuses 16 ab. Dem Saugteller 15 ist eine Betätigungseinrichtung 17 zugeordnet, mit der sich der Saugteller 15 zwischen einer unwirksamen und einer wirksamen Stellung verstellen lässt. In der unwirksamen Stellung sitzt der Saugteller 15 lose am Saugkopf-Gehäuse 16 und ist zum Saugkopf-Gehäuse 16 hin unbelastet. In der wirksamen Stellung der Betätigungseinrichtung 17 ist der Saugteller 15 dagegen zum Saugkopf-Gehäuse 16 hin hochgezogen. Dadurch ist zwischen der ebenen Fläche und dem Saugteller ein Vakuum ausgebildet. Gemäß einer zweiten Alternative ist im Hohlraum des Saugkopfes 14 ein Saugkolben 50 (Figuren 5 und 8) verschieblich geführt. Saugkolben 50 und Betätigungsstößel 18, der auch als Kolbenstange bezeichnet werden könnte, sind vorzugsweise einstückig miteinander verbunden. Der Saugkolben 50 besteht aus steifem Material, beispielsweise Hartkunststoffmaterial. Der Saugkolben 50 ist mittels wenigstens einer Dichtung 55 zur Innenwand des Hohlraumes hin abgedichtet. Beispielsweise kann ein am Umfang des Saugkolbens 50 befestigter Dichtring vorgesehen sein. Ferner befindet sich an der Unterseite des Saugkopfes 50 eine umlaufende Dichtlippe 60 (Fig. 5) zur Abdichtung des Saugkopfes 14 gegenüber der ebenen Fläche.

Die Betätigungseinrichtung 17 greift vorzugsweise im Zentrum des Saugtellers 15 an. Beispielsweise enthält die Betätigungseinrichtung 17 einen am Saugteller 15 befestigten und von diesem hochstehenden Betätigungsstößel 18, der den oberhalb des Saugtellers 15 angeordneten Hohlraum des Saugkopf-Gehäuses 16 durchgreift und an der dem Saugteller 15 entgegengesetzten Oberseite aus dem Saugkopf-Gehäuse 16 ragt, wo am Bolzen ein Betätigungshebel 19 angelenkt ist, der im Außenbereich der Anlenkachse 20 eine Exzenterpartie 21 aufweist, die sich an einer Abstützfläche abstützt. In der unwirksamen Stellung liegt der Anlenkachse 20 nähere Bereich der Exzenterpartie 21 an der Abstützfläche an, so dass der Saugteller 15 entlastet ist. Verschwenkt man den Betätigungshebel 19 aus der unwirksamen Stellung (nicht dargestellt) in die in den Figuren 1 bis 3 und 6 hervorgehende wirksame Stellung, liegt der der Anlenkachse 20 entferntere Bereich der Exzenterpartie 21 auf der Abstützfläche und stützt sich dort ab, so dass der Saugteller 15 seine hochgezogene Stellung einnimmt. Am Saugteller greift noch eine Rückholfeder (nicht dargestellt) an, die ihn beim Verschwenken des Betätigungshebels 19 aus der wirksamen Stellung in die unwirksame Stellung in seiner Ausgangslage zurückbewegt. Die Rückholfeder kann beispielsweise von einer den Betätigungsstößel 18 umgreifenden Schraubenfeder gebildet werden, die sich mit ihrem dem Saugteller 15 entgegengesetzten Ende innen im Saugkopf-Gehäuse 16 abstützt.

Die Handgriffvorrichtung 11 besitzt eine Vakuumverlustanzeigeeinrichtung 22, die auf Abnehmen bzw. Nachlassen des Vakuums anspricht. Die Vakuumverlustanzeigeeinrichtung 22 besitzt ein mechanisch betätigtes Anzeigeelement 23, das mittels Vakuumänderung zwischen einer mit einem ausreichenden Vakuum für die gewünschte Haltekraft der Handgriffvorrichtung 11 korrespondierenden Grundstellung 24 und wenigstens einer Abnahme des Vakuums anzeigenden Verlustanzeigeposition 25 bewegbar ist.

Gemäß erstem Ausführungsbeispiel ist als Anzeigeelement 23 ein zylinderartiger Stopfen vorgesehen, der in eine vorzugsweise mittig an der Oberseite des Saugkopf-Gehäuses 16 befindlichen Aufnahmeöffnung 26 eingesetzt ist. Das stopfenartige Anzeigeelement 23 besitzt einen gegenüber dem Rest durchmessergrößeren Kopfabschnitt 27, der mit einer farbigen, insbesondere roten oder rotorangen Warnmarkierung versehen ist. Die Oberseite des Kopfabschnitts 27 bildet zugleich die Abstützfläche für den Betätigungshebel 19.

Das stopfenartige Anzeigeelement 23 ist über Kopplungsmittel mit dem Saugteller 15 bzw. dem Saugkolben 50 verbunden. Zu den Kopplungsmittel zählt ein Bolzen, der in diesem Fall von dem Betätigungsstößel 18 der Betätigungseinrichtung 17 gebildet ist. Der Bolzen bzw. Betätigungsstößel 18 tritt durch die Aufnahmeöffnung 26 hindurch und ragt an der dem Saugteller bzw. Saugkolben entgegengesetzten Oberseite aus dem Saugkopf-Gehäuse 16 heraus. Der Betätigungsstößel 18 ist relativ unbeweglich mit dem stopfenartigen Anzeigeelement 23 verbunden. Zu den Kopplungsmitteln zählt ferner noch ein Federelement 28, das ebenfalls in die Aufnahmeöffnung 26 eingesetzt ist und sich einerseits ortfest an der Unterseite der Aufnahmeöffnung abstützt, während es andererseits auf die Unterseite des stopfenartigen Anzeigeelementes 23 drückt. Die Federkraft des Federelements 28 wirkt also nach oben/außen von der ebenen Fläche weg und ist mithin entgegengesetzt zu der zur ebenen Fläche hin wirkenden Vakuumkraft des im festgesaugten Zustand der Handgriffvorrichtung ausgebildeten Vakuums.

Ist die Handgriffvorrichtung 11 an einer ebenen Fläche, beispielsweise an Fliesen, festgesaugt und liegt für die gewünschte Haltekraft der Handgriffvorrichtung 11 ausreichendes Vakuum vor, so nimmt das stopfenartige Anzeigeelement 23 der Vakuumverlustanzeigeeinrichtung 22 die in den Figuren 1, 3 und 5 gezeigte Grundstellung 24 ein. Die Vakuumkraft ist dabei so groß, dass es den Betätigungsstößel 18 und das stopfenartige Anzeigeelement 23 gegen die Federkraft des Federelements 28 soweit nach unten zieht, dass der rotmarkierte ausreichende Kopfabschnitt 27 nicht sichtbar im Saugkopf-Gehäuse 16 versenkt ist.

Umgekehrt könnte ein über den Saugkopf vorne überstehendes Teil eine Vakuumkraft signalisieren, welches sich zurückzieht, sobald das Vakuum die erforderliche Vakuumkraft nicht mehr aufbringt. Beispielsweise könnte dies ein Gummidämpfer mit grüner Markierung sein, der bei ausreichendem Vakuum gut sichtbar ist, bei Abnahme des Vakuums jedoch nicht sichtbar verdeckt ist.

Lässt das Vakuum mit der Zeit nach, kommt es also zu einem Vakuumverlust, so lässt auch die durch das Vakuum ausgeübte Kraft in Richtung der ebenen Fläche nach, wodurch die Federkraft des Federelements 28 den Saugteller 15 bzw. Saugkolben 50, den daran befestigten Betätigungsstößel 18 und das stopfenartige Anzeigeelement 23 nach oben drückt, so dass der rotmarkierte Kopfabschnitt 27 des stopfenartigen Anzeigeelementes 23 in seine Verlustanzeigeposition 25 wandert. Dabei taucht der warnmarkierte Kopfabschnitt 27 aus dem Saugkopf-Gehäuse 16 auf, so dass er für den Benutzer deutlich sichtbar wird. Dieser Zustand ist in den Figuren 2, 6 und 8 dargestellt. Zusätzlich wird durch den Federweg, der nachlassenden Vakuumzugkraft entgegengewirkt und so eine verlängerte konstante Vakuumkraft erreicht.

Die Vakuumverlustanzeigeeinrichtung 22 umfasst noch ein dem am gegenüberliegenden anderen Griffende 13b befindlichen Saugkopf 14 zugeordnetes Anzeigeelement 23. Die Anordnungen bzw. Funktionsweisen sind an allen Saugköpfen identisch, wobei sich natürlich das Vakuum des einen Saugkopfes unabhängig vom Vakuum eines anderen Saugkopfes einstellt.

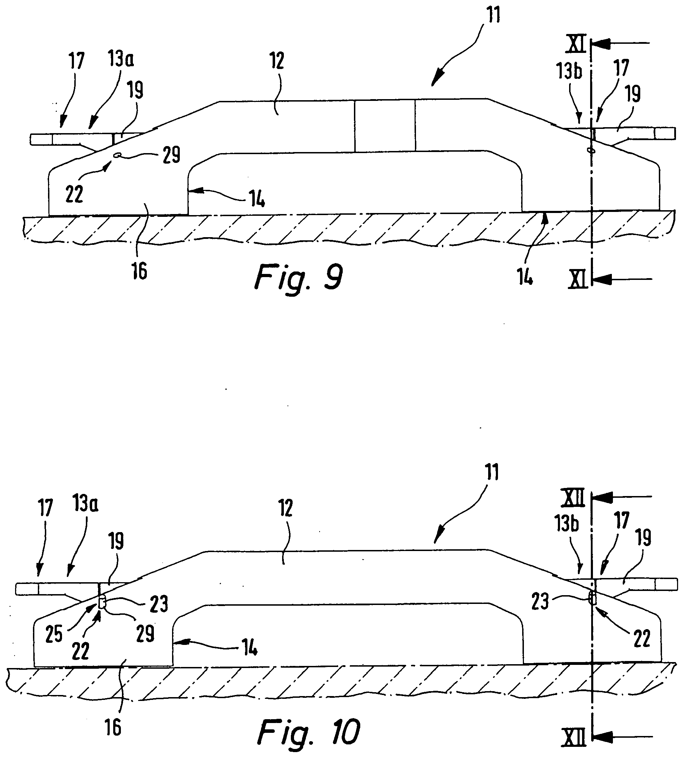

In den Figuren 9 bis 12 ist ein zweites nicht zur Erfindung gehörendes Ausführungsbeispiel der Handgriffvorrichtung 11 dargestellt.

Die Vakuumverlustanzeigeeinrichtung 22 besitzt auch hier ein Anzeigeelement 23, das hier jedoch als Anzeigestift ausgebildet ist.

Das hier beispielhaft stiftartige Anzeigeelement 23 ist in einer vorzugsweise zylindrischen Stiftöffnung 29, die sich von der Oberseite des Saugkopf-Gehäuses 16 bis in den Hohlraum erstreckt, beweglich geführt. An seiner Unterseite ist das stiftartige Anzeigeelement 23 mit Kopplungsmitteln in Form einer gummielastischen Membran 30 verbunden. Die gummielastische Membran 30 wiederum ist in eine Öffnung im Saugteller 15 eingesetzt und bewegt sich bei Vakuumänderung.

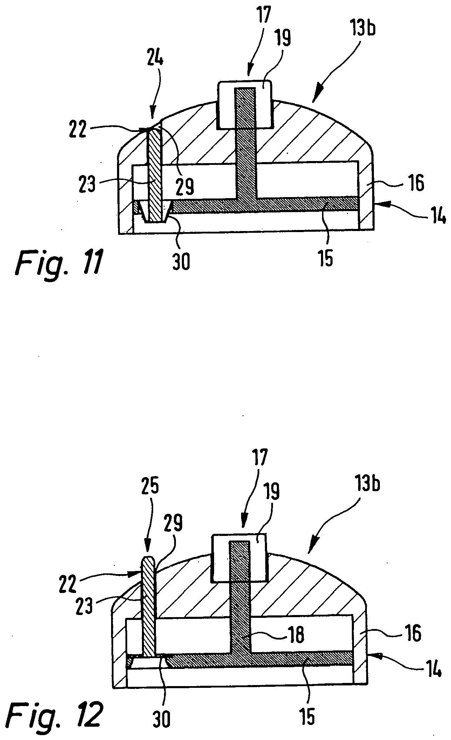

Ist das Vakuum ausreichend groß, nimmt das stiftartige Anzeigeelement 23 seine in den Figuren 9 und 11 gezeigte Grundstellung ein, die dadurch erreicht wird, dass die gummielastische Membran 30 durch die Vakuumkraft zur ebenen Fläche hin gezogen wird, was bewirkt, dass das damit befestigte stiftartige Anzeigeelement 23 ebenfalls nach unten gezogen wird. In dieser Grundstellung 24 ist das stiftartige Anzeigeelement 23 nicht sichtbar in der Stiftöffnung 29 versenkt.

Bei Vakuumteilverlust bewegt sich die gummielastische Membran 30 nach oben und drückt dabei das stiftartige Anzeigeelement 23 ein Stück weit aus der Stiftöffnung 29 heraus. Das stiftartige Anzeigeelement 23 steht deutlich sichtbar über die Oberseite des Saugkopf-Gehäuses 16 hinaus. Es hat seine Verlust-/Gefahrenanzeigeposition 25 eingenommen. Gegebenenfalls kann auch hier der obere Abschnitt des stiftartigen Anzeigeelementes 23 farbig, insbesondere rot markiert sein. Bei einer nicht dargestellten alternativen Ausführungsform kann die Membran 30 selber als Anzeigeelement dienen, wenn dieselbige direkt sichtbar ist und sich dann ggf. ein wulstartiger Fortsatz der Membran, der mit einer Warnmarkierung versehen sein kann, in eine deutlich sichtbare Verlust-/Gefahrenanzeigeposition 25 bewegt.

Anordnung und Funktionsweise des Anzeigeelementes des am anderen Griffende angeordneten Saugkopfes sind wieder identisch.

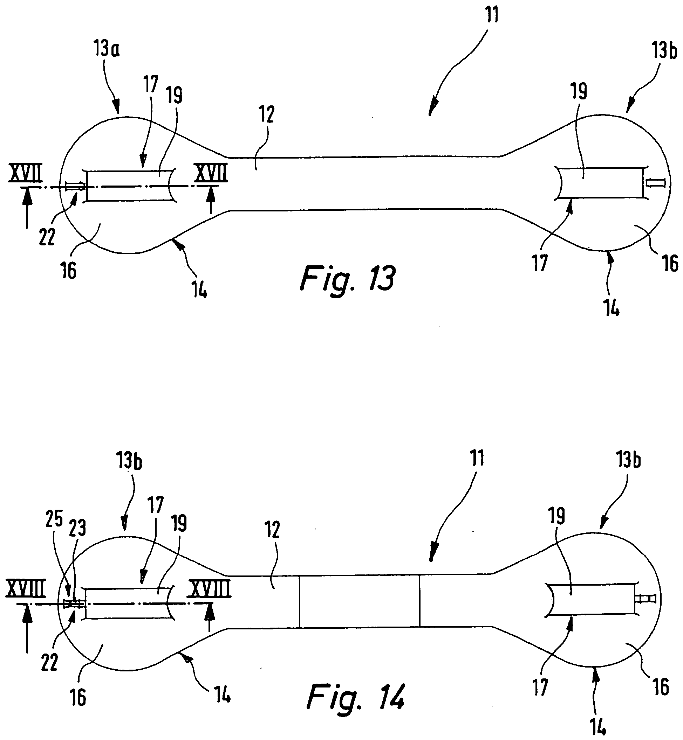

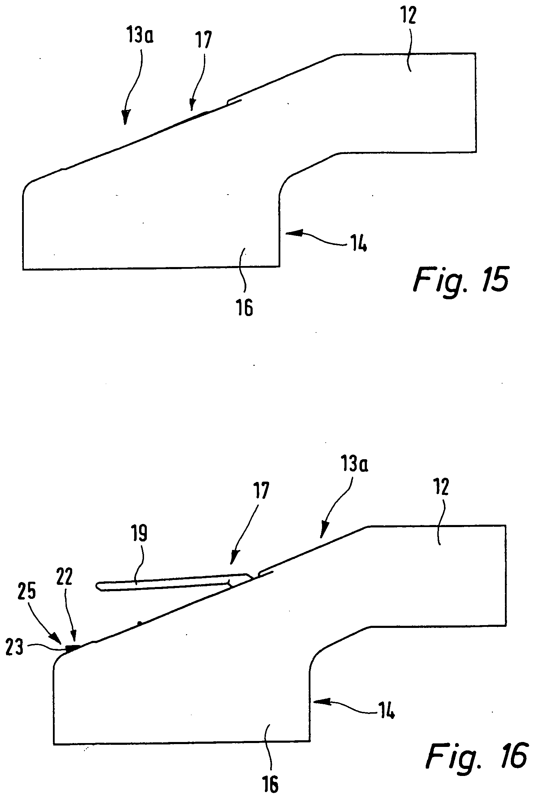

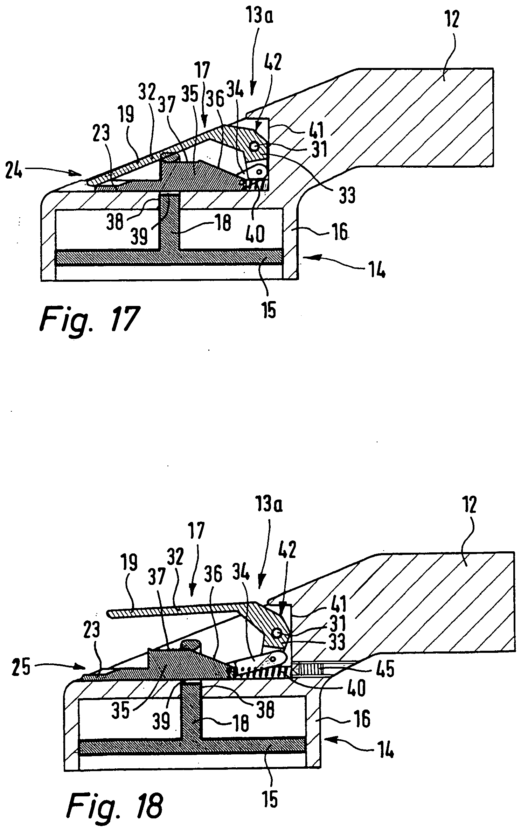

Schließlich zeigen die Figuren 13 bis 18 ein drittes erfindungsgemäßes Ausführungsbeispiel der Handgriffvorrichtung 11.

Die Betätigungseinrichtung 17 ist hier im Vergleich zu den beiden zuvor beschriebenen Ausführungsbeispielen anders aufgebaut. Der Betätigungshebel 19 sitzt nämlich um eine Anlenkachse 31 schwenkbar gelagert außermittig des Saugkopfes 14 und zwar in einer dem Griffstab 12 näheren Position. Der Betätigungshebel 19 ist als zweiarmiger Hebel ausgebildet, wobei der erste relativ lang ausgebildete Hebelarm 32 für die Handhabe durch den Benutzer ausgebildet ist, während der im Saugkopf-Gehäuse 16 untergebrachte zweite Hebelarm 33 schwenkbar mit einer Schubstange 34 verbunden ist. Die Schubstange 34 wiederum ist schwenkbar mit einem keilartigen Stellglied 35 verbunden, das eine vorzugsweise in Richtung weg vom Griffstab 12 ansteigende Schrägfläche 36 aufweist. Bei einer nicht dargestellten Variante kann es sich hierbei auch um eine kreisförmig angeordnete Schrägfläche bzw. schiefe Ebene handeln, die mittels einer Schwenkbewegung des Stellglieds durchfahren wird. Ferner besitzt das keilförmige Stellglied 35 eine im Wesentlichen parallel zur ebenen Fläche bzw. Oberseite des Saugkopf-Gehäuses 16 ausgebildet Reibfläche 37. Schließlich besitzt das keilförmige Stellglied 35 noch einen das Anzeigeelement 23 bildenden Fortsatz. Das keilförmige Stellglied 35 ist gleitend auf der Oberseite der den oberen Abschluss des Hohlraums bildenden Hohlraum-Decke geführt.

Auch hier ist ein Betätigungsstößel 18 vorgesehen, der einerseits mit dem Saugteller 15 verbunden ist, durch eine Durchtrittsöffnung 38 durch die Hohlraum-Decke hindurchtritt und in dessen oberem Bereich eine Durchbrechung 39 ausgebildet ist, durch die das keilförmige Stellglied 35 hindurchragt.

Zur Vakuumverlustanzeigeeinrichtung 22 gehören in diesem Fall das fortsatzartige Anzeigeelement 23, die Reibfläche 37 des keilförmigen Stellglieds 35 und der Betätigungsstößel 18 sowie eine an der dem Fortsatz gegenüberliegenden vorderen Ende des keilförmigen Stellglieds befestigtes Federelement 40, das sich andernends an einer Seitenwand 41 einer den Betätigungshebel 19 aufnehmenden Betätigungskammer 42 abstützt oder zieht. Das Federelement 40 lässt sich mit einer Justierschraube 45 justieren, beispielsweise ist es möglich, die Federkraft des Federelementes 40 einzustellen.

Um die Handgriffvorrichtung 11 an einer ebenen Fläche festzusaugen, wird der erste Hebelarm 32 des Betätigungshebels in Gegen-Uhrzeigerrichtung (sofern der linke Saugkopf betroffen ist) verschwenkt und nach unten gedrückt. Dabei schwenkt der zweite Hebelarm 33 ebenfalls in Gegen-Uhrzeigerrichtung in Richtung auf die Seitenwand 41 zu und zieht dabei die Schubstange 34 ebenfalls in Richtung der Seitenwand 41. Diese Bewegung erfolgt gegen die Federkraft des Federelements 40. Dabei wird das an die Schubstange 34 angelenkte keilförmige Stellglied ebenfalls zur Seitenwand 41, also in Richtung zum Griffstab 12 hin, linear verschoben, wodurch die Schrägfläche 36 an der Durchbrechung 39 des Betätigungsstößels 18 entlang gleitet. Da die Schrägfläche 36 vom Griffstab 12 weg ansteigt, bewirkt dies, dass der Betätigungsstößel 18 und der Saugteller 15 nach oben gezogen werden, wodurch ein Vakuum entsteht. Die Innenwandung der Durchbrechung 39 liegt nunmehr an der Reibfläche 37 an und zwar an einem Ende der Reibfläche 37, das dem fortsatzartigen Anzeigeelement 23 zugewandt ist. Gegebenenfalls kann an diesem Ende ein Vorsprung vorgesehen sein, so dass das keilförmige Stellglied 35 nicht außer Eingriff mit der Durchbrechung 39 des Betätigungsstößels 18 kommt.

Bei ausreichendem Vakuum stellt sich die in den Figuren 13, 15 und 17 gezeigte Situation ein. Dabei wird die Innenwandung der Durchbrechung 39 des Betätigungsstößels 18 aufgrund der in Richtung zur ebenen Fläche hin wirkenden Vakuumkraft auf die Reibfläche 37 des keilförmigen Stellglieds 35 gepresst. Zwischen der Innenwandung der Durchbrechung 39 und dieser Reibfläche 37 entsteht Haftreibung, die durch die Federkraft des Federelements 40 nicht überwunden werden kann. Das fortsatzartige Anzeigeelement 23 ist dabei in seiner Grundstellung 24 nicht sichtbar in der Betätigungskammer 42 versenkt.

Bei Abnahme des Vakuums wird die zwischen der Innenwandung der Durchbrechung 39 und der Reibfläche 37 aufgebrachte Presskraft geringer, wodurch die Haftreibung zwischen diesen beiden Bauteilen in Folge der Federkraft des Federelements 40 überwunden wird. Dadurch wird das keilförmige Stellglied 35 vom Griffstab 12 weg nach außen gedrückt, bis die Innenwandung der Durchbrechung 39 am vorderen Ende der Reibfläche 37 zur Anlage kommt. Auch hier kann gegebenenfalls ein Vorsprung vorgesehen sein, die eine Weiterbewegung des keilförmigen Stellglieds 35 verhindert. Gleichzeitig wird das fortsatzartige Anzeigeelement 23 ebenfalls vom Griffstab weg nach außen gedrückt, beispielsweise längs oder quer zur Längsachse der Handgriffvorrichtung, wodurch es seine von außen sichtbare Warnmarkierungsanzeigeposition 25 einnimmt. Es ragt also aus der Betätigungskammer 42 hervor. Gegebenenfalls kann auch dort eine rote Warnmarkierung und/oder eine grüne OK-Zone vorgesehen sein. Gleichzeitig wird durch die Bewegung des keilförmigen Stellglieds 35 über die Schubstange 34 eine Bewegung des Betätigungshebels 19 in Uhrzeiger-Richtung erzeugt, wodurch der erste Hebelarm 32 wieder ein Stück weit aus der Betätigungskammer 42 herausragt. Dies ist dann ein zusätzlicher Warnindikator, dass Vakuumverlust stattgefunden hat.

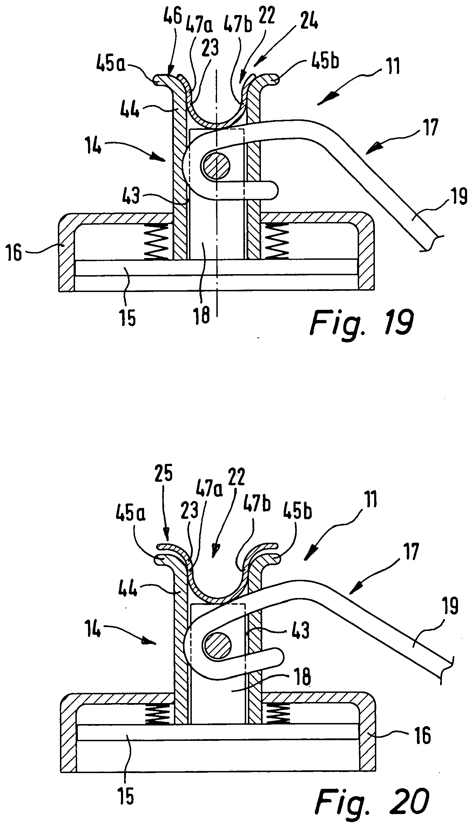

Die Figuren 19 und 20 zeigen ein viertes, nicht zur Erfindung gehörendes Ausführungsbeispiel der Handgriffvorrichtung 11 in schematischer Darstellung.

Auch hier ist ein Betätigungsstößel 18 vorgesehen, der einerseits mit dem Saugteller 15 verbunden ist und durch eine Durchtrittsöffnung 38 durch die Hohlraum-Decke hindurchtritt. Der Betätigungsstößel 18 erstreckt sich in einem Betätigungsraum 43, der von einem hohlförmigen Gehäuseabschnitt 44 des Saugkopf-Gehäuses 16 gebildet ist. Alternativ oder zusätzlich kann sich der Betätigungsstößel 18 auch in der Betätigungskammer 42 des dritten Ausführungsbeispiels erstrecken. Der Gehäuseabschnitt 44 kann an seiner, dem Saugteller 15 abgewandten Oberseite zwei jeweils nach außen umgebogene Randabschnitte 45a, 45b aufweisen, wobei an der Oberseite der Randabschnitte 45a, 45b eine Markierung 46 vorgesehen ist, die anzeigt, dass genügend Vakuum vorhanden ist. Die Markierung 46 kann hierfür beispielsweise in grün gehalten sein. Jedoch sind auch andere Markierungsfarben denkbar, die eindeutig anzeigen, dass ausreichend Vakuum zur Verfügung steht.

Im Betätigungsraum 43 oberhalb des Betätigungsstößel 18 sitzt das Anzeigeelement 23, das gemäß Fig. 19 zunächst bei ausreichendem Vakuum in seiner in den Betätigungsraum versenkten Grundstellung verharrt. Das Anzeigeelement 23 ist hier beispielhaft in Form eines vorgespannten Profils, beispielsweise längliches U-Profil, aus biegeflexiblen Material dargestellt. Die beiden Schenkel 47a, 47b des Profils werden durch die Wandung des hohlförmigen Gehäuseabschnittes zurückgehalten, sich voneinander wegzuspreizen bzw. aufzufalten.

In Fig. 20 ist die Situation dargestellt, in der Vakuumverlust aufgetreten ist. In diesem Fall drückt der Betätigungsstößel das profilartige Anzeigeelement 23 nach oben, so dass die beiden Schenkel 47a, 47b sich schlagartig, schmetterlingsförmig voneinander wegspreizen und dabei die gegebenenfalls grüne OK-Markierung 46 an den Oberseiten der Randabschnitte 45a, 45b des Gehäuseabschnittes überdecken. An den Oberseiten der jeweiligen Schenkel 47a, 47b des Profils befinden sich jeweils eine Warnmarkierung, gegebenenfalls in roter oder rotoranger Farbe, die anzeigt, dass Vakuumverlust stattgefunden hat.

Die zuvor beschriebenen Ausführungsbeispiele zeichnen sich dadurch aus, dass die Anzeigeelemente 23 vor Erreichen der nicht mehr ausreichenden Haltekraft, also bei aufgebrauchter Vakuum-Sicherheitsreserve, die Grundstellung plötzlich, schlagartig, deutlich verlassen oder der bis dahin schleichend angezeigte Vakuumverlust sich umschlagend so verändert, dass dieser in Optik, Form, Haptik und/oder akustisch kombiniert signalwirksam ist. Vakuumverlust wird also sofort angezeigt, wodurch sich mangelnde Wahrnehmung vermeiden lässt, die bei einer sogenannten "schleichenden" Anzeige des Vakuumverlustes, beispielsweise in dem sich die Signalfarbe langsam von grün nach rot ändert, auftreten kann.

Das in Fig. 19 und 20 dargestellte vierte Ausführungsbeispiel lässt sich auch in das in den Fig. 13 bis 18 gezeigte dritte Ausführungsbeispiel integrieren, wobei dann die Saugköpfe jeweils zwei unabhängig voneinander betätigbare Anzeigeelemente 23 aufweisen können. Das profilartige Anzeigeelement 23 könnte hier beispielsweise oberhalb des Betätigungsstößel 18 angeordnet sein, wobei sich dann das U-profilartige Anzeigeelement 23 unterhalb des ersten Hebelarms des Betätigungshebels 19 erstrecken und in der Verlustanzeigeposition über die Breite des ersten Hebelarms hinaus ragen kann (Fig. 14, strichpunktierte Linien). Da sich der Betätigungsstößel 18 auch in der Betätigungskammer 42 befinden kann, ist es möglich, dass sich das profilartige Anzeigeelement zusätzlich, ggf. auch mit gleicher Richtung, beispielsweise horizontal, zum fortsatzartigen Anzeigeelement erstreckt.

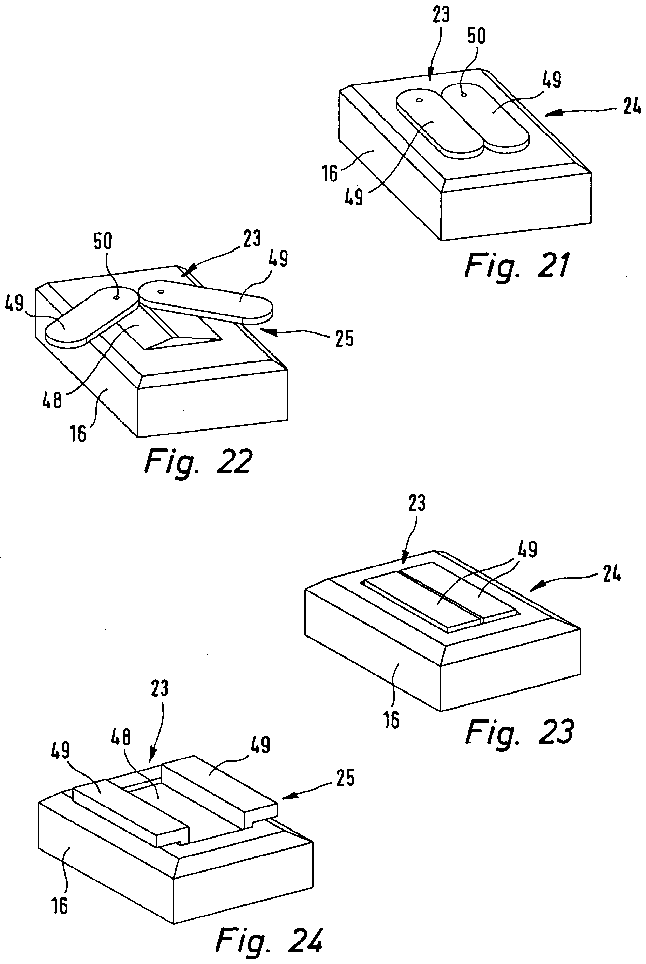

Die Fig. 21 und 22 zeigen eine Ausführungsform des Anzeigeelementes 23. Das Anzeigeelement 23 befindet sich an einem Basiskörper, also beispielsweise am Saugkopf-Gehäuse 16. Der Basiskörper ist der Einfachheit halber quaderförmig dargestellt, kann jedoch, wie erwähnt, vom Saugkopf-Gehäuse 16, oder dem Betätigungshebel oder anderen Peripheriebauteilen der Handgriffvorrichtung 11 gebildet sein. Das Anzeigeelement 23 besitzt einen Betätigungskörper 48, der gegebenenfalls direkt oder über ein Kopplungsglied mit dem Betätigungsstößel 18 gekoppelt ist. Der Betätigungskörper 48 ist in der in Fig. 23 dargestellten Grundstellung 24 des Anzeigeelementes 23 durch wenigstens ein Stellglied 49 verdeckt. Gemäß der in Fig. 23 dargestellten Ausführungsform sind zwei Stellglieder 49 in Form von Schwenkflügeln dargestellt, die die Oberseite des Betätigungskörpers 48 in der Grundstellung 24 des Anzeigeelementes 23 vollständig abdecken.

Bei Vakuumverlust wird der Betätigungskörper 48 nach oben aus einer Ausnehmung herausgedrückt, wobei der Betätigungskörper 48 gleichzeitig die Schwenkflügel, die jeweils an einer Schwenkachse 50 gelagert sind, schmetterlingsartig nach außen, also voneinander weg verschwenkt. An der Oberseite des Betätigungskörpers 48 befindet sich eine ggf. Logo-unterstützte Markierung, beispielsweise in der Farbe Rot, die signalisiert, dass das Vakuum nicht mehr in Ordnung ist, also kein ausreichendes Vakuum zur Verfügung steht. Ferner ist die ausgeschwenkte Stellung der Schwenkflügel ein weiterer Warnindikator für nicht ausreichendes Vakuum. Dieser zusätzliche Warnindikator wirkt sowohl optisch, d.h. die Stellung der Schwenkflügel hat sich verändert, als auch haptisch, d.h. die Stellung kann auch gegebenenfalls erfühlt werden. Dieser zusätzliche, deutlich sichtbare und gegebenenfalls erfühlbare Warnindikator ist vor allem dann von Vorteil, wenn in der Umgebung der wandbefestigten Handgriffvorrichtung 11 diffuses Licht herrscht oder die Handgriffvorrichtung 11 von sehbehinderten Personen benutzt wird.

Die Fig. 23 und 24 zeigen eine weitere Ausführungsform des Anzeigeelementes 23. Das Anzeigeelement 23 ist wiederum an einem Basiskörper, der beispielsweise von Saugkopf-Gehäuse 16 oder dem Betätigungshebel 19 gebildet werden kann, gelagert. Auch hier ist wiederum ein Betätigungskörper 48 vorgesehen, der in der in Fig. 23 gezeigten Grundstellung vollständig durch zwei Stellglieder 49 verdeckt ist. Als Stellglieder 49 sind hier zwei linear nach außen verschiebbare Stellleisten vorgesehen. Bei Vakuumverlust wird der Betätigungskörper 48 wieder nach oben gedrückt, wobei er die beiden Stellleisten voneinander weg nach außen bewegt. In diesem Zustand befindet sich das Anzeigeelement 23 in seiner Verlustanzeigeposition 25. An der Oberseite des Betätigungskörpers befindet sich eine Warnmarkierung, beispielsweise in roter Farbe, die anzeigt, dass Vakuumverlust stattgefunden hat. Durch die ausgestellten Stellleisten wird wiederum ein zusätzlicher, deutlich sichtbarer und gegebenenfalls erfühlbarer Warnindikator für Vakuumverlust bereitgestellt.

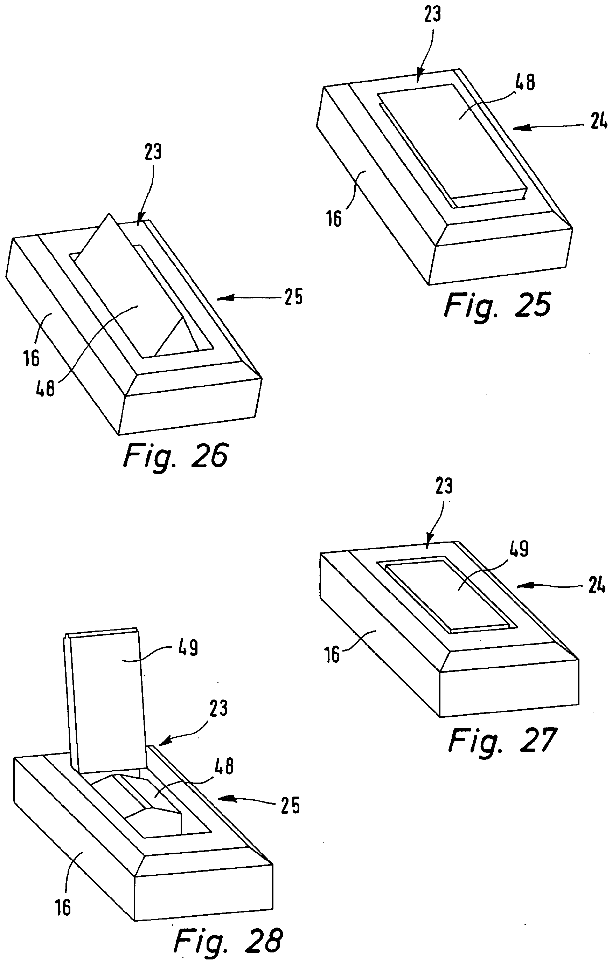

Die Fig. 25 und 26 zeigen eine weitere Ausführungsform des Anzeigeelementes 23, das ebenfalls in einem Basiskörper, beispielsweise dem Saugkopf-Gehäuse 16 oder dem Betätigungshebel 19 untergebracht ist. Im Gegensatz zu den zuvor beschriebenen Ausführungsformen besitzt das Anzeigeelement 23 einen Betätigungskörper 48, jedoch kein Stellglied, wobei der Betätigungskörper in der in Fig. 25 dargestellten Grundstellung des Anzeigeelementes 23 an seiner Oberseite mit einer, ausreichendes Vakuum anzeigenden Markierung versehen ist. Hierzu eignet sich beispielsweise eine grüne OK-Markierung. Tritt nun Vakuumverlust auf, so kippt der Betätigungskörper in seiner Aufnahmeöffnung um, wobei ein Teil des Betätigungskörpers aus der Aufnahmeöffnung herauskommt. Es kommt eine gegebenenfalls rote Warnmarkierung zum Vorschein. Die nach außen ragende Spitze des Betätigungskörpers stellt zudem einen zusätzlichen, deutlich sichtbaren, gegebenenfalls erfühlbaren Warnindikator für Vakuumverlust dar.

Schließlich zeigen die Fig. 27 und 28 eine weitere Ausführungsform des Anzeigeelementes 23, das wiederum an einem Basiskörper, beispielsweise dem Saugkopf-Gehäuse 16 oder Betätigungshebel 19, untergebracht ist. Das Anzeigeelement 23 besitzt einen Betätigungskörper 48, der in der in Fig. 27 dargestellten Grundstellung des Anzeigeelementes 23 vollständig von einem Stellglied 49 in Form eines Kippelementes verdeckt ist. Bei Vakuumverlust wird der Betätigungskörper 48 nach oben gedrückt, wobei dieser dann das Kippglied beaufschlagt, das dann aufklappt. Dadurch ist die in Fig. 28 gezeigte Verlustanzeigeposition 25 des Anzeigeelementes 23 signalwirksam erreicht. An der Oberseite des Betätigungskörpers 48 befindet sich wiederum eine gegebenenfalls rote Warnmarkierung, während das vom Basiskörper nach oben abstehende aufgeklappte Stellglied 49 wiederum einen zusätzlichen, deutlich sichtbaren und gegebenenfalls erfühlbaren Warnindikator für Vakuumverlust darstellt.

Bei den in den Fig. 21 bis 28 dargestellten Ausführungsformen wird das Anzeigeelement 23 bei Vakuumverlust von seiner Grundstellung 24 schlagartig in die Verlustanzeigeposition bewegt. Es wird also eine zuverlässige und deutlich wahrnehmbare, gegebenenfalls erfühlbare Anzeige für Vakuumverlust bereitgestellt.

## Patentansprüche

1. Handgriffvorrichtung, insbesondere Aufstehhilfe für Personen, beispielsweise im Sanitärbereich, mit einem Griffstab (12) an dem an wenigstens einem Griffende (13a, 13b) oder zwischen beiden Griffenden (13a, 13b) wenigstens ein Saugkopf (14) mit einem Saugteller (15) oder einem Saugkolben (50) und einer Betätigungseinrichtung (17) für den Saugteller (15) bzw. Saugkolben (50) angeordnet ist, so dass der wenigstens eine Saugkopf (14) durch Betätigen der Betätigungseinrichtung (17) an einer porösen Fläche unter Bildung eines zwischen der porösen Fläche und dem Saugteller (15) bzw. Saugkolben (50) wirkenden Vakuums festsaugbar und von dieser durch Aufhebung des Vakuums lösbar ist, **dadurch gekennzeichnet, dass** eine auf Abnehmen des Vakuums ansprechende Vakuumverlustanzeigeeinrichtung (22) vorgesehen ist, wobei die Vakuumverlustanzeigeeinrichtung wenigstens ein vom Saugkopf-Gehäuse des Saugkopfes (14) separat ausgebildetes Anzeigeelement (23) aufweist, dass mittels Vakuumänderung zwischen einer mit einem ausreichenden Vakuum für die gewünschte Haltekraft der Handgriffvorrichtung (11) korrespondierenden Grundstellung (24) und wenigstens einer Abnahme des Vakuums anzeigenden Verlustanzeigeposition (25) bewegbar ist, wobei das Anzeigeelement (23) über Kopplungsmittel mit dem Saugteller (15) oder dem Saugkolben (50) gekoppelt ist, die einen einerseits mit dem Saugteller (15) oder dem Saugkolben (50) und andererseits mit dem Anzeigeelement (23) verbundenen Bolzen und ein mit dem Anzeigeelement (23) gekoppeltes Federelement (28, 40) aufweisen, dessen Federkraft gegen die vom Vakuum in Richtung ebene Fläche wirkende Vakuumkraft wirkt, wobei Anzeigeelement (23) und Bolzen relativ zueinander bewegbar sind und durch von der Vakuumkraft erzeugte Haftreibung gegeneinander in Anlage gehalten sind, und wobei bei Abnahme von
Vakuum mittels der senkrecht zur Richtung der Vakuumkraft wirkenden Federkraft des Federelements (40) die Haftreibung überwindbar ist, wodurch das Anzeigeelement (23) in seine eine gegenüber der Handgriffperipherie exponiert, sichtbare und erfühlbare Stellung einnehmbare Verlustanzeigeposition (25) kommt.

2. Handgriffvorrichtung nach Anspruch 1, **dadurch gekennzeichnet, dass** das Anzeigeelement (23) in seiner Grundstellung (24) nicht sichtbar im Saugkopf (14) ungebracht ist.

3. Handgriffvorrichtung nach Anspruch 1 oder 2, **dadurch gekennzeichnet, dass** das Anzeigeelement (23) eine in der Verlustanzeigeposition (25) sichtbare farbige, insbesondere rote oder rotorange und/oder mittels wenigstens eines Logos oder mittels Schrift ausgestaltete Warnmarkierung als zusätzlichen Indikator für Vakuumverlust aufweist.

4. Handgriffvorrichtung nach einem der vorhergehenden Ansprüche 2 bis 4, **dadurch gekennzeichnet, dass** das Anzeigeelement bei verbrauchter Sicherheits-Toleranz an Vakuum ohne in einer Zwischenstellung verharrend von seiner Grundstellung (24) oder von einer bis dahin schleichenden Veränderungsanzeige in eine Verlustanzeige-Endposition bewegbar ist.

5. Handgriffvorrichtung nach einem der vorhergehenden Ansprüche, **dadurch gekennzeichnet, dass** die Kopplungsmittel eine am Saugteller (15) oder am Saugkolben (50) befestigte, durch Vakuumänderung bewegbare, insbesondere gummielastische Membran (30) aufweisen.

6. Handgriffvorrichtung nach einem der vorhergehenden Ansprüche, **dadurch gekennzeichnet, dass** die Betätigungseinrichtung (17) einen am Saugteller (15) bzw. Saugkolben (50) befestigten Betätigungsstößel (18) aufweist, der über eine Anlenkachse (20, 31) mit einem exzentrisch ausgestalteten Betätigungshebel (19) verbunden ist, der zwischen einer Offenund einer Schließstellung verschwenkbar ist, wobei in der Schießstellung aufgrund der Exzentrizität des Betätigungshebels (19) der Betätigungsstößel (18) und der Saugteller (15) von der ebenen Fläche hochgezogen sind, womit Vakuum erzeugt ist.

7. Handgriffvorrichtung nach einem der vorhergehenden Ansprüche, **dadurch gekennzeichnet, dass** am Griffstab (12) an beiden Griffenden (13a, 13b) jeweils mindestens ein Saugkopf (14) sitzt.

8. Handgriffvorrichtung nach einem der vorstehenden Ansprüche, **dadurch gekennzeichnet, dass** am Griffstab (12) in einer Art Reling-Anordnung mehrere Saugköpfe (14) hintereinander aufgereiht sind.

9. Handgriffvorrichtung nach einem der vorhergehenden Ansprüche, **dadurch gekennzeichnet, dass** jedem Saugkopf (14) wenigstens ein Anzeigeelement (23) der Vakuumverlustanzeigeeinrichtung (22) zugeordnet ist.

## Claims

1. Handle device, in particular aid for standing up for persons, for example in the sanitary field, with a grab rail (12) on which is mounted at least one gripping end (13a, 13b) or between two gripping ends (13a, 13b) at least one suction head (14) with a suction disc (15) or a suction piston (50) and an actuation device (17) for the suction disc (15) or suction piston (50) respectively, so that the suction head or heads (14), by actuation of the actuation device (17), may be attached to a porous surface, creating a vacuum acting between the porous surface and the suction disc (15) or suction piston (50) respectively, and may be released from it by removal of the vacuum, **characterised in that** a vacuum loss indicator (22) responding to a drop in vacuum is provided, wherein the vacuum loss indicator has at least one indicator element (23) which is separate from the suction head housing of the suction head (14) and is movable by means of change in vacuum between a basic position (24) corresponding to an adequate vacuum for the desired holding force of the handle device (11) and at least one loss indicator position (25) indicating a reduction in vacuum, wherein the indicator element (23) is connected by connecting means with the suction disc (15) or the suction piston (50), which have a pin connected at one end to the suction disc (15) or the suction piston (50) and at the other end to the indicator element (23), and a spring element (28, 40) connected to the indicator element (23) and with a spring force acting against the vacuum force effected by the vacuum in the direction of a smooth surface, wherein indicator element (23) and pin are movable relative to one another and are held against one another in contact by means of static friction generated by the vacuum force, and wherein in the event of a drop in vacuum the static friction may be overcome by the spring force of the spring element (40) acting at right-angles to the direction of the vacuum force, by which means the indicator element (23) comes into its adoptable loss indicator position (25), exposed relative to the handle periphery, visible and identifiable by touch.

2. Handle device according to claim 1, **characterised in that** the indicator element (23) in its basic position (24) is accommodated, not visible, in the suction head (14).

3. Handle device according to claim 1 or 2, **characterised in that** the indicator element (23) has, as an additional indicator of vacuum loss, a warning mark, visible in the loss indicator position (25), coloured, in particular red or red orange, and/or embellished by at least one logo or by means of lettering.

4. Handle device according to any of the preceding claims 2 to 4, **characterised in that** the indicator element may be moved, if the vacuum safety tolerance is exhausted, into a loss indicator end position, without remaining in an intermediate position, from its basic position (24) or from a previously creeping indication of change.

5. Handle device according to any of the preceding claims, **characterised in that** the connecting means have a membrane (30), in particular rubber-elastic, fixed to the suction disc (15) or the suction piston (50), and movable by a change in vacuum.

6. Handle device according to any of the preceding claims, **characterised in that** the actuation device (17) has an actuating plunger (18) fixed to the suction disc (15) or the suction piston (50) and connected via a hinge axis (20, 31) to an eccentrically shaped actuating lever (19) which may be pivoted between an open and a closed position, wherein in the closed position, on account of the eccentricity of the actuating lever (19), the actuating plunger (18) and the suction disc (15) are lifted up from the flat surface, leading to generation of vacuum.

7. Handle device according to any of the preceding claims, **characterised in that** on the grab rail (12), at least one suction head (14) rests on each of the gripping ends (13a, 13b).

8. Handle device according to any of the preceding claims, **characterised in that** several suction heads (14) are lined up on the grab rail (12) one behind the other in a kind of railing arrangement.

9. Handle device according to any of the preceding claims, **characterised in that** each suction head (14) is assigned at least one indicator element (23) of the vacuum loss indicator (22).

## Revendications

1. Dispositif de poignée, en particulier système d'aide pour se lever pour des personnes, par exemple dans le domaine médical, comprenant une barre de préhension (12), au niveau de laquelle au moins une tête d'aspiration (14) avec une ventouse (15) ou un piston d'aspiration (50) et un système d'actionnement (17) pour la ventouse (15) ou le piston d'aspiration (50) est disposée au niveau au moins d'une extrémité de préhension (13a, 13b) ou entre les deux extrémités de préhension (13a, 13b) de sorte que l'au moins une tête d'aspiration (14) puisse être immobilisée par aspiration par l'actionnement du système d'actionnement (17) au niveau d'une surface poreuse en formant un vide agissant entre la surface poreuse et la ventouse (15) ou le piston d'aspiration (50) et puisse être détachée de ladite surface poreuse en supprimant le vide, **caractérisé en ce qu'**un système indicateur de perte de vide (22) répondant à la baisse du vide est prévu, dans lequel le système indicateur de perte de pression présente au moins un élément indicateur (23) réalisé séparément du boîtier de tête d'aspiration de la tête d'aspiration (14), lequel élément indicateur peut être déplacé au moyen d'un changement de vide entre une position de base (24) correspondant à un vide suffisant pour la force de maintien souhaitée du dispositif de poignée (11) et au moins une position d'indication de perte (25) indiquant une baisse du vide, dans lequel l'élément indicateur (23) est couplé, par l'intermédiaire de moyens de couplage, à la ventouse (15) ou au piston d'aspiration (50), lesquels présentent un boulon relié d'une part à la ventouse (15) ou au piston d'aspiration (50) et d'autre part à l'élément indicateur (23) et un élément de ressort (28, 40) couplé à l'élément indicateur (23), dont la force de ressort agit à l'encontre de la force de vide agissant du vide en direction d'une surface plane, dans lequel l'élément indicateur (23) et le boulon peuvent être déplacés l'un par rapport à l'autre et sont maintenus en appui l'un contre l'autre par un frottement par adhérence produit par la force de vide, et dans lequel lors de la baisse du vide, le frottement par adhérence peut être surmonté au moyen de la force de ressort, agissant de manière perpendiculaire par rapport à la direction de la force de vide, de l'élément de ressort (40), l'élément indicateur (23) venant ainsi dans sa position d'indication de perte (25) pouvant adopter une position visible et perceptible, lors d'une exposition par rapport à la périphérie de poignée.

2. Dispositif de poignée selon la revendication 1, **caractérisé en ce que** l'élément indicateur (23), dans sa position de base (24), est abrité dans la tête d'aspiration (14) de manière non visible.

3. Dispositif de poignée selon la revendication 1 ou 2, **caractérisé en ce que** l'élément indicateur (23) présente un marquage d'alerte coloré, en particulier rouge ou rouge orange, visible dans la position d'indication de perte (25) et/ou configuré au moyen au moins d'un logo ou au moyen d'une inscription sous la forme d'un indicateur supplémentaire pour la perte de vide.

4. Dispositif de poignée selon l'une quelconque des revendications précédentes 2 à 4, **caractérisé en ce que** l'élément indicateur peut être déplacé, en présence d'une tolérance de sécurité dépassée en matière de vide, sans se figer dans une position intermédiaire, depuis une position de base (24) ou depuis une indication de changement jusqu'à présent insidieuse, dans une position finale d'indication de perte.

5. Dispositif de poignée selon l'une quelconque des revendications précédentes, **caractérisé en ce que** les moyens de couplage présentent une membrane (30), en particulier élastique comme de la gomme, fixée au niveau de la ventouse (15) ou au niveau du piston d'aspiration (50), pouvant être déplacée du fait du changement de vide.

6. Dispositif de poignée selon l'une quelconque des revendications précédentes, **caractérisé en ce que** le système d'actionnement (17) présente un coulisseau d'actionnement (18) fixé au niveau de la ventouse (15) ou du piston d'aspiration (50), lequel est relié, par l'intermédiaire d'un axe d'articulation (20, 31), à un levier d'actionnement (19) configuré de manière excentrique, lequel peut pivoter entre une position ouverte et une position fermée, dans lequel dans la position fermée, du fait de l'excentricité du levier d'actionnement (19), le coulisseau d'actionnement (18) et la ventouse (15) sont tirés vers le haut depuis la surface plane, ce qui permet de produire le vide.

7. Dispositif de poignée selon l'une quelconque des revendications précédentes, **caractérisé en ce que** respectivement au moins une tête d'aspiration (14) siège au niveau de la barre de préhension (12), au niveau des deux extrémités de préhension (13a, 13b).

8. Dispositif de poignée selon l'une quelconque des revendications précédentes, **caractérisé en ce que** plusieurs têtes d'aspiration (14) sont alignées les unes derrière les autres au niveau de la barre de préhension (12) selon un agencement de type rail.

9. Dispositif de poignée selon l'une quelconque des revendications précédentes, **caractérisé en ce qu'**au moins un élément indicateur (23) du système d'indication de perte de vide (22) est associé à chaque tête d'aspiration (14).
